# EUROPEAN PATENT APPLICATION

(11) **EP 3 985 927 A1**
(43) Date of publication of application: **20.04.2022**
(21) Application number: 20843507.3
(22) Date of filing: 22.07.2020
(51) Int. Cl.: H04L 12/24

(54) **PACKET LOSS POSITIONING METHOD, APPARATUS AND SYSTEM, AND COMPUTER STORAGE MEDIUM**

(30) Priority: 25.07.2019 CN 201910678152
(71) Applicant: Huawei Technologies Co., Ltd., Longgang District Shenzhen, Guangdong 518129 (CN)
(72) Inventor: ZHANG, Zhenwei, Shenzhen, Guangdong 518129 (CN); WU, Lvxian, Shenzhen, Guangdong 518129 (CN)
(74) Representative: Maiwald Patent- und Rechtsanwaltsgesellschaft mbH
(86) International application number: PCT/CN2020/103614
(87) International publication number: WO 2021/013205

(57) **Abstract**

This application discloses a packet loss positioning method, apparatus, system, and a computer storage medium, and belongs to the field of network technologies. A network device obtains an identifier of a target traffic flow, where the target traffic flow is a traffic flow in which packet loss occurs on the network device. The network device generates packet loss information of the target traffic flow, where the packet loss information includes the identifier of the target traffic flow and an identifier of the network device. The network device sends the packet loss information to an analysis device, so that the analysis device determines a packet loss location of the target traffic flow. Because the packet loss information sent by the network device to the analysis device includes the identifier of the traffic flow in which packet loss occurs on the network device and the identifier of the network device, based on the packet loss information, the analysis device may determine that packet loss occurs on the network device, and may determine the specific traffic flow in which packet loss occurs on the network device. This improves packet loss positioning precision.

## Description

### TECHNICAL FIELD

This application relates to the field of network technologies, and in particular, to a packet loss positioning method, apparatus, and system, and a computer storage medium.

### BACKGROUND

With rapid development of Internet protocol (Internet Protocol, IP) technologies, more and more services are transmitted by using an IP network, that is, traffic flows are forwarded between a transmitting end and a receiving end by using a network device to implement communication. Currently, most services are sensitive to packet loss. Especially, real-time services such as video on demand or video conferencing are extremely sensitive to packet loss.

At present, packet loss positioning is generally performed by using a packet conservation algorithm for Internet (packet conservation algorithm for internet, iPCA). An analysis device periodically obtains a quantity of packets received and a quantity of packets sent by each network device in a network in a statistical period. When a quantity of packets sent by a network device in the statistical period is less than a quantity of packets received by the network device, the network device is determined as a packet loss device in the statistical period.

However, with the current packet loss positioning method, only whether packet loss occurs on a network device can be determined, resulting in relatively low packet loss positioning precision.

### SUMMARY

This application provides a packet loss positioning method, apparatus, and system, and a computer storage medium, to resolve a problem of relatively low packet loss positioning precision.

According to a first aspect, a packet loss positioning method is provided. A network device obtains an identifier of a target traffic flow, where the target traffic flow is a traffic flow in which packet loss occurs on the network device. The network device generates packet loss information of the target traffic flow, where the packet loss information includes the identifier of the target traffic flow and an identifier of the network device. The network device sends the packet loss information to an analysis device, so that the analysis device determines a packet loss location of the target traffic flow.

In this application, because the packet loss information reported by the network device to the analysis device includes the identifier of the traffic flow in which packet loss occurs on the network device and the identifier of the network device, based on the packet loss information, the analysis device can determine that packet loss occurs on the network device, and can determine the specific traffic flow in which packet loss occurs on the network device. Compared with an existing packet loss positioning method, this improves packet loss positioning precision. When a service of a traffic flow is faulty, the analysis device may determine a packet loss location of the traffic flow based on historical packet loss information of the traffic flow, to implement fast packet loss positioning.

Optionally, the packet loss information further includes one or more of a statistical moment, a packet loss quantity of the target traffic flow within a statistical time, and information about an inbound port of the target traffic flow on the network device.

The analysis device can further determine, based on the packet loss information, a time within which packet loss occurs in the target traffic flow, a packet loss quantity, and an inbound port of the target traffic flow on a packet loss device, to further improve the packet loss positioning precision.

Optionally, the network device may further periodically collect statistics on a traffic flow in which packet loss occurs on the network device.

Optionally, the identifier of the target traffic flow includes 5-tuple information of the target traffic flow.

According to a second aspect, another packet loss positioning method is provided An analysis device receives packet loss information that is of a target traffic flow and that is sent by a network device, where the packet loss information includes an identifier of the target traffic flow and an identifier of the network device, and the target traffic flow is a traffic flow in which packet loss occurs on the network device. The analysis device determines a packet loss location of the target traffic flow based on the packet loss information.

Optionally, the packet loss information further includes one or more of a statistical moment, a packet loss quantity of the target traffic flow within a statistical time, and information about an inbound port of the target traffic flow on the network device.

Optionally, after receiving the packet loss information sent by the network device, the analysis device may store the packet loss information in a database. A process in which the analysis device determines a packet loss location of the target traffic flow based on the packet loss information includes: when a query instruction for the target traffic flow is received, the analysis device determines a packet loss location of the target traffic flow based on the database, where the query instruction carries the identifier of the target traffic flow.

In this application, the analysis device may store received packet loss information in a database. When a service of a traffic flow is faulty, the analysis device can query historical packet loss information of the traffic flow based on the database, to determine a packet loss location, to implement fast packet loss positioning.

According to a third aspect, a packet loss positioning apparatus is provided, applied to a network device. The apparatus includes a plurality of function modules, and the plurality of function modules interact to implement the method in the first aspect and the implementations of the first aspect. The plurality of function modules may be implemented based on software, hardware, or a combination of software and hardware, and the plurality of function modules may be arbitrarily combined or divided based on specific implementation.

According to a fourth aspect, another packet loss positioning apparatus is provided, applied to an analysis device. The apparatus includes a plurality of function modules, and the plurality of function modules interact to implement the method in the second aspect and the implementations of the second aspect. The plurality of function modules may be implemented based on software, hardware, or a combination of software and hardware, and the plurality of function modules may be arbitrarily combined or divided based on specific implementation.

According to a fifth aspect, a network device is provided. The network device includes a processor and a memory.

The memory is configured to store a computer program. The computer program includes program instructions.

The processor is configured to invoke the computer program to implement the packet loss positioning method according to any one of the first aspect.

According to a sixth aspect, an analysis device is provided. The analysis device includes a processor and a memory.

The memory is configured to store a computer program. The computer program includes program instructions.

The processor is configured to invoke the computer program to implement the packet loss positioning method according to any one of the second aspect.

According to a seventh aspect, a packet loss positioning system is provided. The system includes a network device and an analysis device, the network device includes the packet loss positioning apparatus according to the third aspect, and the analysis device includes the packet loss positioning apparatus according to the fourth aspect.

According to an eighth aspect, a computer storage medium is provided. The computer storage medium stores instructions. When the instructions are executed by a processor of a network device, the packet loss positioning method according to the first aspect is implemented; or when the instructions are executed by a processor of an analysis device, the packet loss positioning method according to any one of the second aspect is implemented.

The technical solutions provided in this application bring at least the following beneficial effects:

According to the packet loss positioning method provided in this application, a network device may obtain an identifier of a target traffic flow in which packet loss occurs, generate packet loss information that includes the identifier of the target traffic flow and an identifier of the network device, and then send the packet loss information to an analysis device. The analysis device can determine a packet loss location of the target traffic flow based on the packet loss information. Because the packet loss information reported by the network device to the analysis device includes the identifier of the traffic flow in which packet loss occurs on the network device and the identifier of the network device, based on the packet loss information, the analysis device can determine that packet loss occurs on the network device, and can determine the specific traffic flow in which packet loss occurs on the network device. Compared with an existing packet loss positioning method, this improves packet loss positioning precision. In addition, the packet loss information may further include a statistical moment, a packet loss quantity of the target traffic flow within a statistical time, and information about an inbound port of the target traffic flow on the network device. In this case, the analysis device can further determine, based on the packet loss information, a time within which packet loss occurs in the target traffic flow, a packet loss quantity, and an inbound port of the target traffic flow on a packet loss device, to further improve the packet loss positioning precision.

In addition, because each network device in a communications network may report, to the analysis device in real time, packet loss information of a traffic flow in which packet loss occurs, the analysis device can implement real-time packet loss positioning for traffic flows in the entire network. In addition, the analysis device may further store received packet loss information in a database. When a service of a traffic flow is faulty, the analysis device can query historical packet loss information of the traffic flow based on the database, to determine a packet loss location, to implement fast packet loss positioning.

### BRIEF DESCRIPTION OF DRAWINGS

FIG. 1 is a schematic structural diagram of a packet loss positioning system according to an embodiment of this application;
FIG. 2 is a schematic structural diagram of a communications network according to an embodiment of this application;
FIG. 3 is a schematic structural diagram of another communications network according to an embodiment of this application;
FIG. 4 is a flowchart of a packet loss positioning method according to an embodiment of this application;
FIG. 5 is a schematic structural diagram of a network device according to an embodiment of this application;
FIG. 6 is a schematic diagram of a scenario in which a network device sends packet loss information to an analysis device according to an embodiment of this application;
FIG. 7 is a schematic structural diagram of a packet loss positioning apparatus according to an embodiment of this application;
FIG. 8 is a schematic structural diagram of another packet loss positioning apparatus according to an embodiment of this application;
FIG. 9 is a schematic structural diagram of a packet loss positioning apparatus according to another embodiment of this application;
FIG. 10 is a schematic structural diagram of another packet loss positioning apparatus according to another embodiment of this application;
FIG. 11 is a block diagram of a network device according to an embodiment of this application; and
FIG. 12 is a block diagram of an analysis device according to an embodiment of this application.

### DESCRIPTION OF EMBODIMENTS

To make the objectives, technical solutions, and advantages of this application clearer, the following further describes the implementations of this application in detail with reference to the accompanying drawings.

In a current packet loss positioning method, an analysis device can obtain only a total quantity of packets received and a total quantity of packets sent by a network device in a statistical period. Therefore, the analysis device can determine only whether packet loss occurs on the network device in the statistical period. That is, only a network device on which packet loss occurs can be determined, but a traffic flow in which packet loss occurs on the network device cannot be determined. In addition, when a service is faulty, if there are a plurality of network devices on which packet loss occurs in a network, the current packet loss positioning method cannot determine a network device or network devices on which packet loss occurs in a traffic flow of the faulty service, either. Therefore, current packet loss positioning precision is relatively low.

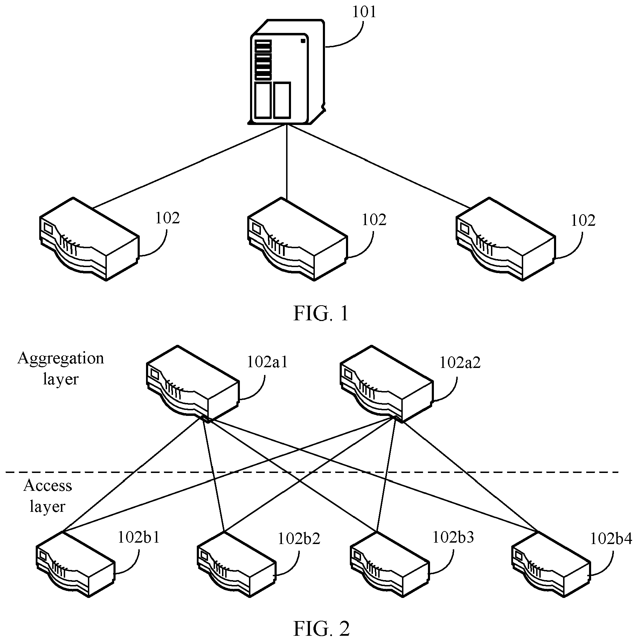

FIG. 1 is a schematic structural diagram of a packet loss positioning system according to an embodiment of this application. As shown in FIG. 1, the packet loss positioning system includes an analysis device 101 and a network device 102 in a communications network. A quantity of network devices in FIG. 1 is merely used as an example, and is not used as a limitation on the communications network provided in this embodiment of this application. The analysis device 101 may be a gateway device in the communications network.

Optionally, the analysis device 101 may be one server, or a server cluster including several servers, or a cloud computing service center. The network device 102 may be a switch, a router, or the like. The analysis device 101 is connected to each network device 102 in the communications network by using a wired network or a wireless network.

The communications network provided in this embodiment of this application may be a data center network (data center network, DCN), a metropolitan area network, a wide area network, a campus network, or the like. A type of the communications network is not limited in this embodiment of this application. Optionally, the communications network provided in this embodiment of this application may be a two-layer network or a three-layer network.

For example, FIG. 2 is a schematic structural diagram of a communications network according to an embodiment of this application. As shown in FIG. 2, the communications network is a two-layer network, including an aggregation layer and an access layer. The aggregation layer is a high-speed switching backbone of the communications network. The access layer is configured to connect workstations (including terminals or servers) to the communications network. Optionally, referring to FIG. 2, the convergence layer includes two convergence layer network devices 102a1 and 102a2, and the access layer includes four access layer network devices 102b1 to 102b4. The communications network shown in FIG. 2 may be a fat tree (fat tree or leaf-spine) topology network. In this case, the aggregation layer network devices 102a1 and 102a2 are spine switches, and the access layer network devices 102b1 to 102b4 are leaf switches. A quantity of uplinks of each leaf switch is equal to a quantity of spine switches, and a quantity of downlinks of each spine switch is equal to a quantity of leaf switches.

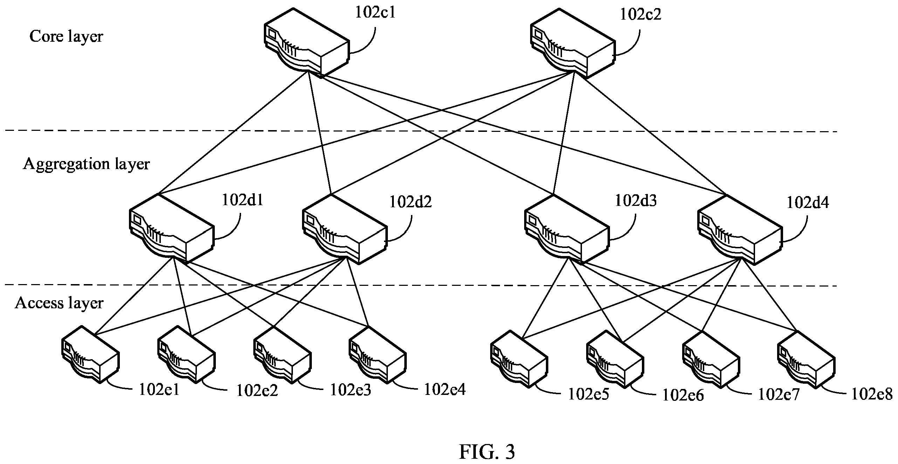

For example, FIG. 3 is a schematic structural diagram of another communications network according to an embodiment of this application. As shown in FIG. 3, the communications network is a three-layer network, including a core layer, an aggregation layer, and an access layer. The core layer is a high-speed switching backbone of the communications network. The aggregation layer is configured to provide aggregation connections (connecting the access layer and the core layer). The access layer is configured to connect workstations to the communications network. Optionally, referring to FIG. 3, the core layer includes two core network devices 102c1 and 102c2. The aggregation layer includes four aggregation layer network devices 102d1 to 102d4, which are divided into a first group of aggregation layer network devices 102d1 and 102d2 and a second group of aggregation layer network devices 102d3 and 102d4. The access layer includes eight access layer network devices 102e1 to 102e8. Four access layer network devices 102e1 to 102e4 are connected to the first group of convergence layer network devices 102d1 and 102d2, and the other four access layer network devices 102e5 to 102e8 are connected to the second group of aggregation layer network devices 102d3 and 102d4. Optionally, the aggregation layer and the access layer of the communications network may form a fat tree topology network. In this case, the aggregation layer network devices 102d1 to 102d4 are spine switches, and the access layer network devices 102e1 to 102e8 are leaf switches.

In this embodiment of this application, the network device 102 in the packet loss positioning system shown in FIG. 1 may be any network device in the communications network shown in FIG. 2 or FIG. 3.

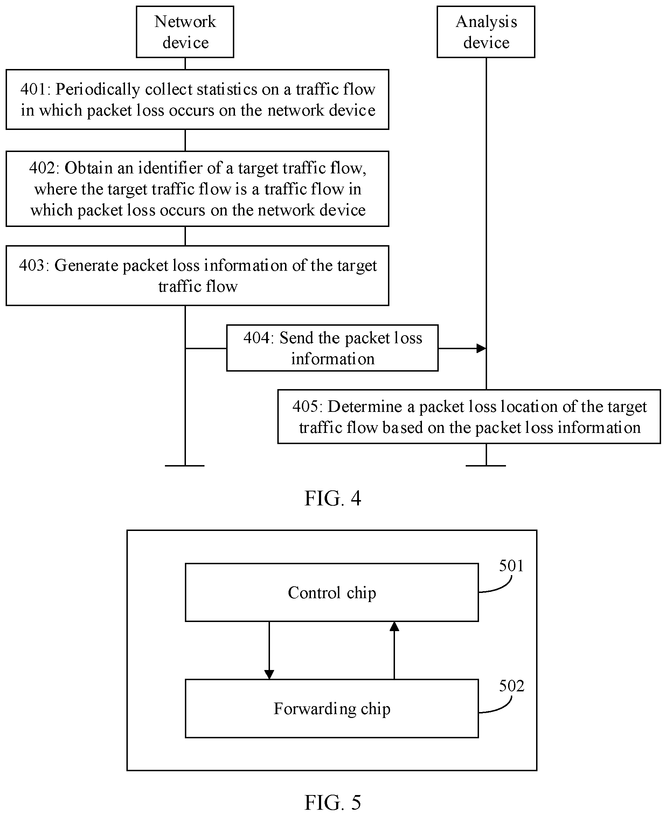

FIG. 4 is a flowchart of a packet loss positioning method according to an embodiment of this application. The method may be applied to the packet loss positioning system shown in FIG. 1. As shown in FIG. 1, the method includes the following steps.

Step 401: A network device periodically collects statistics on a traffic flow in which packet loss occurs on the network device.

Optionally, FIG. 5 is a schematic structural diagram of a network device according to an embodiment of this application. As shown in FIG. 5, the network device includes a control chip 501 and a forwarding chip 502. The control chip 501 and the forwarding chip 502 are connected by using a physical connection. The control chip may be a central processing unit (central processing unit, CPU) or a field programmable gate array (field programmable gate array, FPGA) chip. The forwarding chip may be a network processor (network processor, NP). Optionally, the control chip and the forwarding chip in the network device may alternatively be integrated, that is, a control function and a forwarding function are integrated on one chip. This is not limited in this embodiment of this application.

Optionally, the forwarding chip has a plurality of network interfaces (interface), a network interface for receiving a traffic flow is an inbound port of the traffic flow on the network device, and inbound ports of all packets in a same traffic flow are the same. After entering the forwarding chip from a network interface of the forwarding chip, a packet of the traffic flow may be processed by the forwarding chip, or transmitted by the forwarding chip to the control chip and processed by the control chip. A packet processing action of the forwarding chip and/or the control chip includes drop (drop). In this embodiment of this application, the forwarding chip and/or the control chip may record information about a dropped packet. The information about the packet includes 5-tuple information of the packet and information about an inbound port of the packet on the network device. The 5-tuple information includes a source IP address, a destination IP address, a source port, a destination port, and a transport layer protocol of the packet. The information about the inbound port of the packet on the network device includes a port number of the inbound port of the packet on the network device. The transport layer protocol includes transport control protocol (Transmission Control Protocol, TCP) and user datagram protocol (User Datagram Protocol, UDP).

The network device may periodically collect statistics on a traffic flow in which packet loss occurs on the network device and a packet loss quantity. For example, at an end moment of each statistical time, the network device obtains all traffic flows in which packet loss occurs within the statistical time and a packet loss quantity of each traffic flow in which packet loss occurs.

Step 402: The network device obtains an identifier of a target traffic flow, where the target traffic flow is a traffic flow in which packet loss occurs on the network device.

Optionally, the identifier of the target traffic flow includes 5-tuple information of the target traffic flow. Because 5-tuple information of all packets of a same traffic flow is the same, 5-tuple information of the traffic flow is 5-tuple information of a packet of the traffic flow.

For example, the identifier of the target traffic flow may be "SIP:192.168.0.93; DIP:192.168.92.10; SPORT:23; DPORT:16300; TCP", indicating that a packet in the target traffic flow is transmitted based on TCP, whose source IP address is 192.168.0.93, destination IP address is 192.168.92.10, source port is 23, and destination port is 16300.

Step 403: The network device generates packet loss information of the target traffic flow.

The packet loss information includes the identifier of the target traffic flow and an identifier of the network device. The identifier of the network device is used to uniquely identify the network device in a communications network. Optionally, the identifier of the network device includes an IP address of the network device.

Optionally, the packet loss information further includes one or more of a statistical moment, a packet loss quantity of the target traffic flow within a statistical time, and information about an inbound port of the target traffic flow on the network device. Optionally, the statistical moment includes a start moment and an end moment of the statistical time. For example, the statistical moment is "start: 2019-3-3 12:22:33; end: 2019-3-3 12:28:33". Alternatively, the statistical moment includes a moment at which the packet loss information is generated or an end moment of the statistical time. For example, the statistical moment is "2019-6-25 20:35:16.635". Statistical times of all network devices in the communications network may be the same, or may be different. This is not limited in this embodiment of this application. When the network device periodically collects statistics on a traffic flow in which packet loss occurs on the network device, a statistical time is a statistical period.

Step 404: The network device sends the packet loss information to an analysis device.

In this embodiment of this application, the network device sends the packet loss information to the analysis device in a form of a packet. The packet loss information may include the identifier of the target traffic flow, the identifier of the network device, the statistical moment, the packet loss quantity of the target traffic flow within the statistical time, and the information about the inbound port of the target traffic flow. The identifier of the target traffic flow, the statistical moment, the packet loss quantity of the target traffic flow within the statistical time, and the information about the inbound port of the target traffic flow on the network device may be carried in a payload field of the packet for transmission, and the identifier of the network device may be carried in a packet header for transmission or carried in the payload field of the packet for transmission.

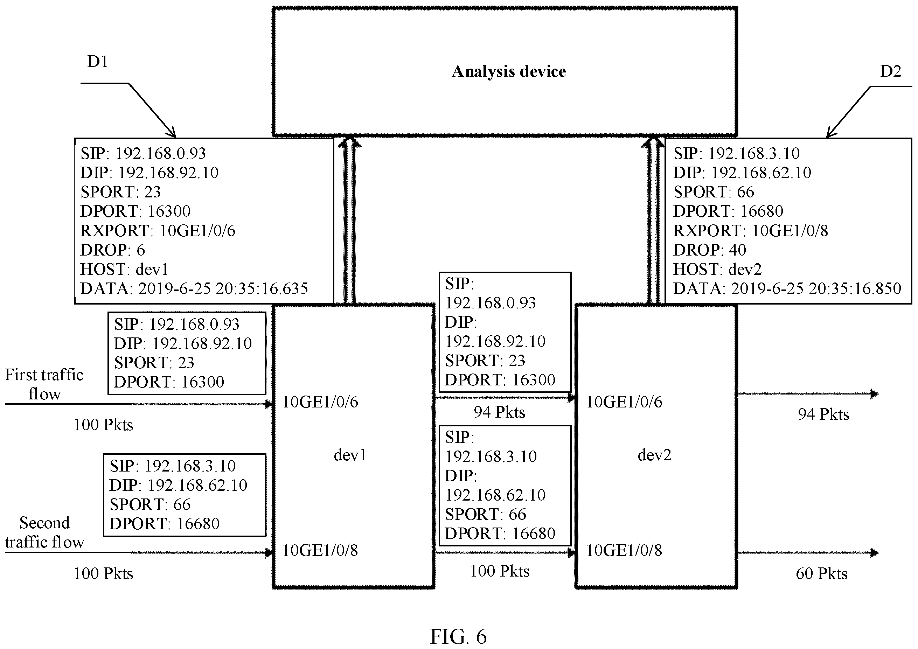

For example, FIG. 6 is a schematic diagram of a scenario in which a network device sends packet loss information to an analysis device according to an embodiment of this application. As shown in FIG. 6, a communications network includes two network devices (dev1 and dev2). The dev1 and the dev2 have a network interface "10GE1/0/6" and a network interface "10GE/1/0/8". Within a statistical time, 100 packets (packets, Pkts) of a first traffic flow enter the dev1 from the network interface "10GE1/0/6", and 6 packets are dropped when the packets pass through the dev1. In this case, the dev1 sends packet loss information D1 of the first traffic flow to the analysis device. The remaining 94 packets of the first traffic flow enter the dev2 from the network interface "10GE1/0/6". No packet loss occurs when the first traffic flow passes through the dev2, and the dev2 continues to transmit the 94 packets to a downstream device. Within the statistical time, 100 packets of a second traffic flow enter the dev1 from the network interface "10GE1/0/8", no packet loss occurs when the packets pass through the dev1, and the dev1 transmits the 100 packets of the second traffic flow to the dev2. The 100 packets of the second traffic flow enter the dev2 from the network interface "10GE1/0/8", and 40 packets are dropped when the packets pass through the dev2. In this case, the dev2 sends packet loss information D2 of the second traffic flow to the analysis device, and the dev2 continues to transmit the remaining 60 packets of the second traffic flow to a downstream device. Referring to FIG. 6, a source IP address (SIP) of the first traffic flow is 192.168.0.93, a destination IP address (DIP) is 192.168.92.10, a source port (SPORT) is 23, and a destination port (DPORT) is 16300. A source IP address of the second traffic flow is 192.168.3.10, a destination IP address is 192.168.62.10, a source port is 66, and a destination port is 16680. The packet loss information D1 and the packet loss information D2 that are sent by the network devices to the analysis device each include a source IP address, a destination IP address, a source port, and a destination port of a corresponding traffic flow, an inbound port (RXPORT) of the traffic flow on a network device, a packet loss quantity (DROP), and an identifier (HOST) of the network device, and a statistical moment (DATA). The statistical moment may be a moment at which the packet loss information is generated.

Step 405: The analysis device determines a packet loss location of the target traffic flow based on the packet loss information.

Optionally, after receiving the packet loss information sent by the network device, the analysis device may store the packet loss information in a database. When receiving a query instruction for the target traffic flow, the analysis device determines a packet loss location of the target traffic flow based on the database. The packet loss location of the traffic flow refers to a network device on which packet loss occurs in the traffic flow. The query instruction for the target traffic flow carries the identifier of the target traffic flow, and the query instruction may be triggered after a service of the target traffic flow is faulty.

For example, the packet loss information of the target traffic flow in the database is stored in a form of a table, and the packet loss information received by the analysis device includes the 5-tuple information of the target traffic flow, the identifier of the network device, the statistical moment (the start moment and the end moment of the statistical time), the information about the inbound port of the target traffic flow on the network device, and the packet loss quantity of the target traffic flow within the statistical time. In this case, a storage form of the packet loss information of the target traffic flow in the database may be shown in Table 1.

**Table 1**

| Start moment | End momen t | Source IP address | Destina tion IP address | Source port | Destinatio n port | Transport layer protocol | Network interface | Packet loss device | Packet loss quantit y |
|---|---|---|---|---|---|---|---|---|---|
| S1 | E1 | 1.1.1.1 | 2.2.2.2 | 1000 | 80 | UDP | 10GE1/0/1 | Dev1 | 7 |
| S1 | E1 | 1.1.1.1 | 2.2.2.1 | 1000 | 80 | UDP | 10GE1/0/3 | Dev2 | 8 |
| S1 | E2 | 1.1.1.1 | 2.2.2.1 | 1000 | 80 | TCP | 10GE1/0/3 | Dev2 | 9 |

For example, when the analysis device receives a query instruction that is for a traffic flow and that carries 5-tuple information "a source IP address is 1.1.1.1, a destination IP address is 2.2.2.2, a source port is 1000, a destination port is 80, and a transport layer protocol is UDP", the analysis device may determine, by querying Table 1, that a packet loss location of the traffic flow is Dev1, and a packet loss quantity is 7. The analysis device may further obtain a time within which packet loss occurs and an inbound port of the traffic flow on the packet loss device, to implement precise packet loss positioning in the network.

A sequence of steps of the packet loss positioning method provided in this embodiment of the present invention may be properly adjusted, and a step may be correspondingly added or deleted based on a situation. Any method that can be readily figured out by a person skilled in the art within the technical scope disclosed in this application shall fall within the protection scope of this application. Therefore, details are not described again.

In conclusion, according to the packet loss positioning method provided in this embodiment of this application, a network device may obtain an identifier of a target traffic flow in which packet loss occurs, generate packet loss information that includes the identifier of the target traffic flow and an identifier of the network device, and then send the packet loss information to an analysis device. The analysis device may determine a packet loss location of the target traffic flow based on the packet loss information. Because the packet loss information reported by the network device to the analysis device includes the identifier of the traffic flow in which packet loss occurs on the network device and the identifier of the network device, based on the packet loss information, the analysis device can determine that packet loss occurs on the network device, and can determine the specific traffic flow in which packet loss occurs on the network device. Compared with an existing packet loss positioning method, this improves packet loss positioning precision. In addition, the packet loss information may further include a statistical moment, a packet loss quantity of the target traffic flow within a statistical time, and information about an inbound port of the target traffic flow on the network device. In this case, the analysis device can further determine, based on the packet loss information, a time within which packet loss occurs in the target traffic flow, a packet loss quantity, and an inbound port of the target traffic flow on a packet loss device, to further improve the packet loss positioning precision.

In addition, because each network device in a communications network may report, to the analysis device in real time, packet loss information of a traffic flow in which packet loss occurs, the analysis device can implement real-time packet loss positioning for traffic flows in the entire network. In addition, the analysis device may further store received packet loss information in a database. When a service of a traffic flow is faulty, the analysis device can query historical packet loss information of the traffic flow based on the database, to determine a packet loss location, to implement fast packet loss positioning.

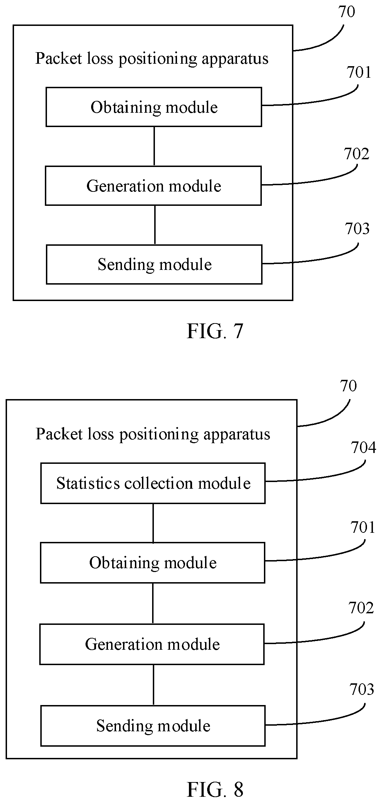

FIG. 7 is a schematic structural diagram of a packet loss positioning apparatus according to an embodiment of this application. The apparatus may be applied to the network device 102 in the packet loss positioning system shown in FIG. 1. As shown in FIG. 7, the apparatus 70 includes:
an obtaining module 701, configured to obtain an identifier of a target traffic flow, where the target traffic flow is a traffic flow in which packet loss occurs on the network device;
a generation module 702, configured to generate packet loss information of the target traffic flow, where the packet loss information includes the identifier of the target traffic flow and an identifier of the network device; and
a sending module 703, configured to send the packet loss information to an analysis device, so that the analysis device determines a packet loss location of the target traffic flow.

Optionally, the packet loss information further includes one or more of a statistical moment, a packet loss quantity of the target traffic flow within a statistical time, and information about an inbound port of the target traffic flow on the network device.

Optionally, as shown in FIG. 8, the apparatus 70 further includes:
a statistics collection module 704, configured to periodically collect statistics on a traffic flow in which packet loss occurs on the network device.

Optionally, the identifier of the target traffic flow includes 5-tuple information of the target traffic flow.

In conclusion, according to the packet loss positioning apparatus provided in this embodiment of this application, a network device obtains, by using the obtaining module, an identifier of a target traffic flow in which packet loss occurs, generates, by using the generation module, packet loss information that includes the identifier of the target traffic flow and an identifier of the network device, and then sends the packet loss information to an analysis device by using the sending module. Because the packet loss information reported by the network device to the analysis device includes the identifier of the traffic flow in which packet loss occurs on the network device and the identifier of the network device, based on the packet loss information, the analysis device can determine that packet loss occurs on the network device, and can determine the specific traffic flow in which packet loss occurs on the network device. Compared with an existing packet loss positioning method, this improves packet loss positioning precision.

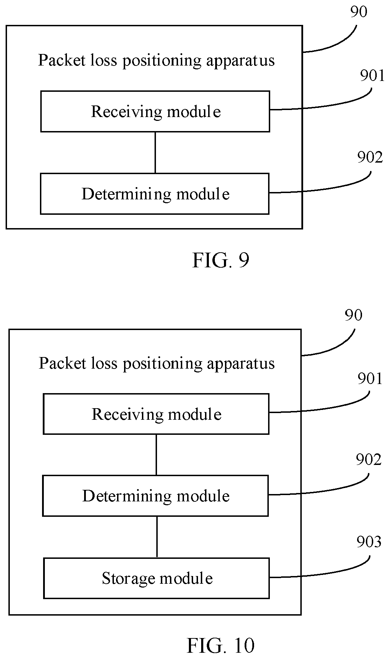

FIG. 9 is a schematic structural diagram of a packet loss positioning apparatus according to another embodiment of this application. The apparatus may be applied to the analysis device 101 in the packet loss positioning system shown in FIG. 1. As shown in FIG. 9, the apparatus 90 includes:
a receiving module 901, configured to receive packet loss information that is of a target traffic flow and that is sent by a network device, where the packet loss information includes an identifier of the target traffic flow and an identifier of the network device, and the target traffic flow is a traffic flow in which packet loss occurs on the network device; and
a determining module 902, configured to determine a packet loss location of the target traffic flow based on the packet loss information.

Optionally, the packet loss information further includes one or more of a statistical moment, a packet loss quantity of the target traffic flow within a statistical time, and information about an inbound port of the target traffic flow on the network device.

Optionally, as shown in FIG. 10, the apparatus 90 further includes:
a storage module 903, configured to store the packet loss information in a database. The determining module 902 is configured to: when a query instruction for the target traffic flow is received, determine a packet loss location of the target traffic flow based on the database, where the query instruction carries the identifier of the target traffic flow.

In conclusion, according to the packet loss positioning apparatus provided in this embodiment of this application, the analysis device receives, by using the receiving module, the packet loss information that is of the target traffic flow and that is sent by the network device. Because the packet loss information reported by the network device to the analysis device includes the identifier of the traffic flow in which packet loss occurs on the network device and the identifier of the network device, based on the packet loss information, the analysis device can determine that packet loss occurs on the network device, and can determine the specific traffic flow in which packet loss occurs on the network device. Compared with an existing packet loss positioning method, this improves packet loss positioning precision.

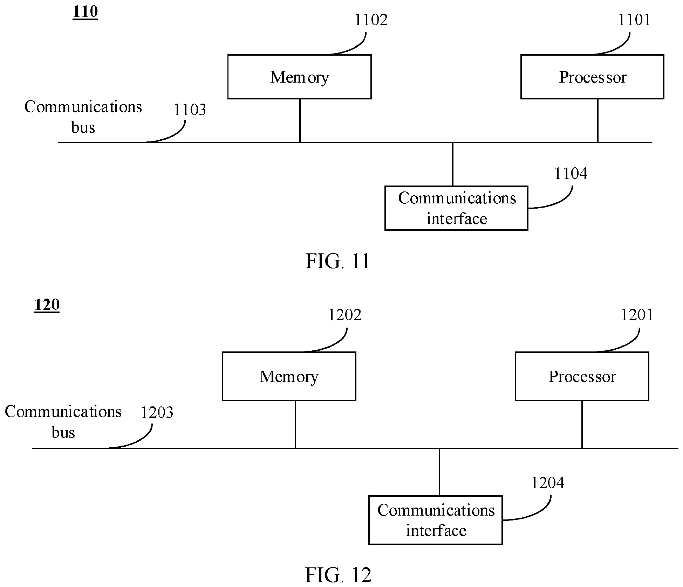

FIG. 11 is a schematic block diagram of a network device according to an embodiment of this application. As shown in FIG. 11, the network device 110 includes a processor 1101 and a memory 1102.

The memory 1101 is configured to store a computer program. The computer program includes program instructions.

The processor 1102 is configured to invoke the computer program to implement steps performed by the network device in the packet loss positioning method shown in FIG. 4.

Optionally, the network device 110 further includes a communications bus 1103 and a communications interface 1104.

The processor 1101 includes one or more processing cores, and the processor 1101 executes various functional applications and data processing by running the computer program.

The memory 1102 may be configured to store a computer program. Optionally, the memory may store an operating system and an application program unit required for at least one function. The operating system may be an operating system such as a real-time operating system (Real-Time executive, RTX), Linux, Unix, Windows, or OS X.

There may be a plurality of communications interfaces 1104, and the communications interfaces 1104 are configured to communicate with another device, for example, communicate with an analysis device.

The memory 1102 and the communications interface 1104 are separately connected to the processor 1101 by using the communications bus 1103.

FIG. 12 is a block diagram of an analysis device according to an embodiment of this application. As shown in FIG. 12, the analysis device 120 includes a processor 1201 and a memory 1202.

The memory 1201 is configured to store a computer program. The computer program includes program instructions.

The processor 1202 is configured to invoke the computer program to implement steps performed by the analysis device in the packet loss positioning method shown in FIG. 4.

Optionally, the analysis device 120 further includes a communications bus 1203 and a communications interface 1204.

The processor 1201 includes one or more processing cores, and the processor 1201 executes various functional applications and data processing by running the computer program.

The memory 1202 may be configured to store a computer program. Optionally, the memory may store an operating system and an application program unit required for at least one function. The operating system may be an operating system such as a real-time operating system (Real-Time executive, RTX), Linux, Unix, Windows, or OS X.

There may be a plurality of communications interfaces 1204, and the communications interfaces 1204 are configured to communicate with another device, for example, communicate with a network device.

The memory 1202 and the communications interface 1204 are separately connected to the processor 1201 by using the communications bus 1203.

An embodiment of this application further provides a computer storage medium. The computer storage medium stores instructions. When the instructions are executed by a processor of a network device, steps performed by the network device in the packet loss positioning method shown in FIG. 4 are implemented; or when the instructions are executed by a processor of an analysis device, steps performed by the analysis device in the packet loss positioning method shown in FIG. 4 are implemented.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

In this embodiment of this application, the terms "first", "second", and "third" are used only for description purposes, and cannot be understood as indicating or implying relative importance. The term "at least one" means one or more, and the term "a plurality of' means two or more, unless otherwise expressly specified.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made without departing from the concept and principle of this application should fall within the protection scope of this application.

## Claims

1. A packet loss positioning method, applied to a network device, wherein the method comprises:
obtaining an identifier of a target traffic flow, wherein the target traffic flow is a traffic flow in which packet loss occurs on the network device;
generating packet loss information of the target traffic flow, wherein the packet loss information comprises the identifier of the target traffic flow and an identifier of the network device; and
sending the packet loss information to an analysis device, so that the analysis device determines a packet loss location of the target traffic flow.

2. The method according to claim 1, wherein the packet loss information further comprises one or more of a statistical moment, a packet loss quantity of the target traffic flow within a statistical time, and information about an inbound port of the target traffic flow on the network device.

3. The method according to claim 1 or 2, wherein the method further comprises:
periodically collecting statistics on a traffic flow in which packet loss occurs on the network device.

4. The method according to any one of claims 1 to 3, wherein the identifier of the target traffic flow comprises 5-tuple information of the target traffic flow.

5. A packet loss positioning method, applied to an analysis device, wherein the method comprises:
receiving packet loss information that is of a target traffic flow and that is sent by a network device, wherein the packet loss information comprises an identifier of the target traffic flow and an identifier of the network device, and the target traffic flow is a traffic flow in which packet loss occurs on the network device; and
determining a packet loss location of the target traffic flow based on the packet loss information.

6. The method according to claim 5, wherein the packet loss information further comprises one or more of a statistical moment, a packet loss quantity of the target traffic flow within a statistical time, and information about an inbound port of the target traffic flow on the network device.

7. The method according to claim 5 or 6, wherein after the receiving packet loss information sent by a network device, the method further comprises:
storing the packet loss information in a database; and
the determining a packet loss location of the target traffic flow based on the packet loss information comprises:
when a query instruction for the target traffic flow is received, determining a packet loss location of the target traffic flow based on the database, wherein the query instruction carries the identifier of the target traffic flow.

8. A packet loss positioning apparatus, applied to a network device, wherein the apparatus comprises:
an obtaining module, configured to obtain an identifier of a target traffic flow, wherein the target traffic flow is a traffic flow in which packet loss occurs on the network device;
a generation module, configured to generate packet loss information of the target traffic flow, wherein the packet loss information comprises the identifier of the target traffic flow and an identifier of the network device; and
a sending module, configured to send the packet loss information to an analysis device, so that the analysis device determines a packet loss location of the target traffic flow.

9. The apparatus according to claim 8, wherein the packet loss information further comprises one or more of a statistical moment, a packet loss quantity of the target traffic flow within a statistical time, and information about an inbound port of the target traffic flow on the network device.

10. The apparatus according to claim 8 or 9, wherein the apparatus further comprises:
a statistics collection module, configured to periodically collect statistics on a traffic flow in which packet loss occurs on the network device.

11. The apparatus according to any one of claims 8 to 10, wherein the identifier of the target traffic flow comprises 5-tuple information of the target traffic flow.

12. A packet loss positioning apparatus, applied to an analysis device, wherein the apparatus comprises:
a receiving module, configured to receive packet loss information that is of a target traffic flow and that is sent by a network device, wherein the packet loss information comprises an identifier of the target traffic flow and an identifier of the network device, and the target traffic flow is a traffic flow in which packet loss occurs on the network device; and
a determining module, configured to determine a packet loss location of the target traffic flow based on the packet loss information.

13. The apparatus according to claim 12, wherein the packet loss information further comprises one or more of a statistical moment, a packet loss quantity of the target traffic flow within a statistical time, and information about an inbound port of the target traffic flow on the network device.

14. The apparatus according to claim 12 or 13, wherein the apparatus further comprises:
a storage module, configured to store the packet loss information in a database; and
the determining module is configured to:
when a query instruction for the target traffic flow is received, determine a packet loss location of the target traffic flow based on the database, wherein the query instruction carries the identifier of the target traffic flow.

15. A network device, wherein the network device comprises a processor and a memory, wherein
the memory is configured to store a computer program, wherein the computer program comprises program instructions; and
the processor is configured to invoke the computer program to implement the packet loss positioning method according to any one of claims 1 to 4.

16. An analysis device, wherein the analysis device comprises a processor and a memory, wherein
the memory is configured to store a computer program, wherein the computer program comprises program instructions; and
the processor is configured to invoke the computer program to implement the packet loss positioning method according to any one of claims 5 to 7.

17. A packet loss positioning system, wherein the system comprises a network device and an analysis device, the network device comprises the packet loss positioning apparatus according to any one of claims 8 to 11, and the analysis device comprises the packet loss positioning apparatus according to any one of claims 12 to 14.

18. A computer storage medium, wherein the computer storage medium stores instructions, and when the instructions are executed by a processor of a network device, the packet loss positioning method according to any one of claims 1 to 4 is implemented; or when the instructions are executed by a processor of an analysis device, the packet loss positioning method according to any one of claims 5 to 7 is implemented.
